# EUROPÄISCHE PATENTANMELDUNG

(11) **EP 1 158 762 A2**
(43) Veröffentlichungstag der Anmeldung: **28.11.2001**
(21) Anmeldenummer: 01110144.1
(22) Anmeldetag: 04.05.2001
(51) Int. Cl.: H04N 1/12

(54) **Rotierbar gelagerte Druckträgerführung**

(30) Priorität: 17.05.2000 US 205018 P
(71) Anmelder: Heidelberger Druckmaschinen Aktiengesellschaft, 69115 Heidelberg (DE)
(72) Erfinder: Karski, Morris, Victor, NY 14534 (US); Luther, Richard Guy, Hamlin, NY 14464 (US); Rapkin, Alan Earl, Fairport, NY 14450 (US); Suk, Tony, Rochester, NY 14624 (US)
(74) Vertreter: Franzen, Peter

(57) **Zusammenfassung**

Bei der vorliegenden Erfindung handelt es sich um eine rotierbar gelagerte Druckträgerführung (1) in einem Scanner mit ortsfestem Lesekopf, mit einer Wischleiste (30), die mittels Drehpunkten (36) gegenüber und parallel zu einem ortsfesten Abtastglasschlitz (2) gelagert ist und im Ruhezustand auf dem Abtastglasschlitz (2) aufliegt, wobei ein Originaldruckträger beim Durchlaufen zwischen Druckträgerführung (1) und Abtastglasschlitz (2) eine Rotation der Druckträgerführung (1) um die Drehpunkte (36) verursacht, so dass die rotierbar gelagerte Druckträgerführung (1) im Gegenzug Druck auf den Originaldruckträger ausübt, der dadurch an den Abtastglasschlitz (2) angedrückt wird und zwar mit genügend Druck, um das Glas zu reinigen, aber nicht soviel Druck, dass es zu einem Papierstau kommt.

## Beschreibung

Die vorliegende Erfindung betrifft den Bereich der Kopierer und Scanner und ist insbesondere geeignet für digitale elektrofotografische Geräte.

Wenn ein Dokument in einem Scanner mit ortsfestem Lesekopf gescannt wird, können Verunreinigungen auf dem Abtastglasschlitz, beispielsweise Papierstaub, Toner etc., unerwünschte Effekte auf den Kopien bewirken. Gemäß dem Stand der Technik wird das Original selbst beim Transport über den Abtastglasschlitz zur Reinigung des Abtastglases eingesetzt. Das Gewicht des Papiers ist jedoch nicht immer groß genug, um das Glas zu reinigen. Man hat mit Hilfe von Führungen versucht, Druck auf die Originale auszuüben, während sie über den Abtastglasschlitz transportiert werden, aber zur Vermeidung von Papierstaus bei der Verarbeitung von Dünndruckpapier ist ein Spielraum zwischen der Führung und dem Abtastglasschlitz vorgesehen. Aus diesem Grund reinigt insbesondere Dünndruckpapier das Glas nicht effektiv genug.

Wünschenswert ist eine rotierbare Führung, die Druck auf eine ganze Reihe von Papierarten ausüben kann, darunter auch Dünndruckpapier, ohne dass es zu einem Papierstau kommt. Es ist daher Aufgabe der Erfindung, eine Vorrichtung der eingangs genannten Art zu schaffen, die es ermöglicht, mit einem Originaldruckträger den Abtastglasschlitz eines Scanners zu reinigen.

Diese Aufgabe wird mittels einer Vorrichtung gemäß den kennzeichnenden Merkmalen des Anspruches 1 gelöst.

Bei der vorliegenden Erfindung handelt es sich um eine rotierbar gelagerte Druckträgerführung in einem Scanner mit ortsfestem Lesekopf, die es ermöglicht, mit dem Originaldruckträger den Abtastglasschlitz zu reinigen. Der Abtastglasschlitz verfügt über ein erstes Ende und ein zweites Ende, die sich in Längsrichtung gegenüber liegen, und wird vom Papier in Querrichtung von der Eintrittsseite zur Austrittsseite hin passiert. Die rotierbar gelagerte Druckträgerführung umfasst ein erstes Endstück, ein zweites Endstück und eine Wischleiste. Das erste Endstück hat eine erste Öffnung und ist am ersten Abtastglasschlitzende mit dem Scanner verbunden. Das zweite Endstück weist eine zweite Öffnung auf und ist am zweiten Abtastglasschlitzende mit dem Scanner verbunden.

Die Wischleiste umfasst ein erstes Wischleistenende, ein diesem gegenüberliegendes zweites Wischleistenende und einen Drehpunkt. Das erste Wischleistenende ist durch eine erste Öffnung hindurch am Drehpunkt drehbar am ersten Endstück befestigt, und das zweite Wischleistenende ist durch eine zweite Öffnung hindurch am Drehpunkt drehbar am zweiten Endstück befestigt, so dass die Wischleiste im Ruhezustand auf dem Abtastglasschlitz aufliegt. Gewicht, Form und Drehpunkt der Wischleiste sind so gewählt, dass beim Transportieren des Papiers über den Abtastglasschlitz die Kraft des Papiers die Wischleiste geringfügig dreht, so dass das Papier zwischen der Wischleiste und dem Abtastglasschlitz hindurchlaufen kann und die Wischleiste anhebt, so dass er Druck auf das Papier ausübt.

Die Merkmale der vorliegenden Erfindung werden in der folgenden Beschreibung bevorzugter Ausführungsbeispiele im Zusammenhang mit den beigefügten, nachstehend aufgeführten Zeichnungen näher erläutert.

Es zeigen:
- Fig. 1: eine Rückansicht der rotierbar gelagerten Druckträgerführung gemäß einer Ausführungsform der Erfindung; und
- Fig. 2: eine Explosionsansicht einer rotierbar gelagerten Druckträgerführung.

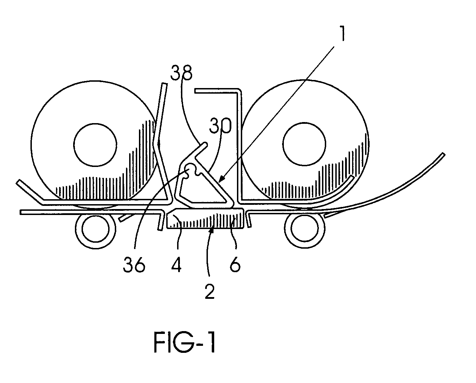

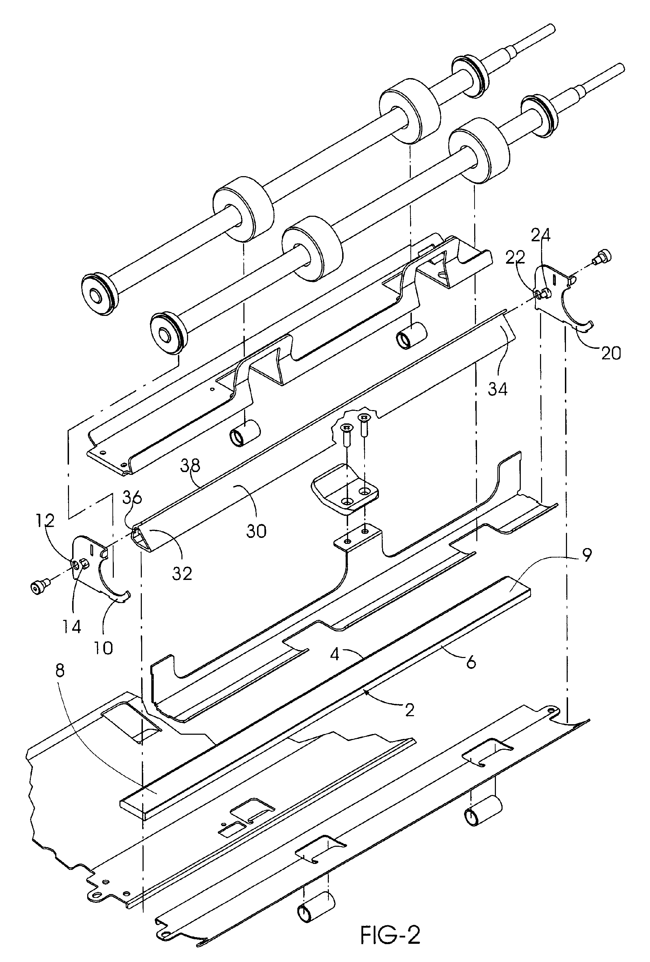

In Fig. 1-2, die nicht maßstabsgerecht gezeichnet sind und in denen gleiche Bauteile mit gleichen Bezugszeichen gekennzeichnet sind, werden verschiedene Aspekte der Erfindung gezeigt. In Fig. 1 ist als ein Aspekt der Erfindung eine rotierbar gelagerte Druckträgerführung 1 in einem Scanner mit ortsfestem Lesekopf gezeigt, die es ermöglicht, mit dem Originaldruckträger den Abtastglasschlitz 2 zu reinigen.

Der Abtastglasschlitz 2 hat ein erstes Ende 8 und ein zweites Ende 9, die sich in Längsrichtung gegenüberliegen, wobei das Papier in Querrichtung von der Eintrittsseite 4 zur Austrittsseite 6 geschoben wird. Die rotierbar gelagerte Druckträgerführung umfasst ein erstes Endstück 10, ein zweites Endstück 20 und eine Wischleiste 30. Das erste Endstück 10 ist mit einer ersten Öffnung 12 versehen und am ersten Abtastglasschlitzende 8 mit dem Scanner verbunden. Das zweite Endstück 20 ist mit einer zweiten Öffnung 22 versehen und am zweiten Abtastglasschlitzende 9 mit dem Scanner verbunden.

Die Wischleiste 30 verfügt über ein erstes Wischleistenende 32, ein gegenüberliegendes zweites Wischleistenende 34 und einen Drehpunkt 36. Die Wischleistenenden 32, 34 sind jeweils am Drehpunkt 36 drehbar durch die erste bzw. zweite Öffnung 12 bzw. 22 hindurch so am ersten bzw. zweiten Endstück 10, 20 befestigt, dass die Wischleiste 30 im Ruhezustand auf dem Abtastglasschlitz 2 aufliegt. Gewicht, Form und Drehpunkt 36 der Wischleiste 30 sind so gewählt, dass beim Passieren des Papiers über den Abtastglasschlitz 2 die Kraft des Papiers bewirkt, dass sich die Wischleiste 30 geringfügig um den Drehpunkt 36 dreht und dabei zulässt, dass das Papier zwischen der Wischleiste 30 und dem Abtastglasschlitz 2 hindurchgleitet. Dabei wird die Wischleiste 30 angehoben, so dass sie Druck auf das Papier ausübt.

In einer anderen Ausgestaltung dieser Erfindung wird der Drehpunkt 36 so gewählt, dass sich mehr als 50 % des Gewichts der Wischleiste 30 auf der Austrittsseite 6 des Drehpunkts 36 befindet.

In einer weiteren Ausgestaltung der Erfindung ist vorgesehen, dass die Wischleiste 30 im Ruhezustand des Scanners am Ruhepunkt (nicht gezeigt) auf der Austrittsseite 6 des Drehpunktes 36 auf dem Abtastglasschlitz 2 aufliegt, und dass die Wischleiste 30 vom Ruhepunkt 35 ausgehend nach oben in Richtung zur Eintrittsseite 4 des Abtastglasschlitzes 2 abgewinkelt ist.

In einer weiteren Ausgestaltung dieser Erfindung überschreitet das Gewicht der Wischleiste 30 etwa 100 g (3,5 Unzen) nicht, wenn er mit Papier verwendet wird, dessen Gewicht zwischen etwa 60 g/m² und etwa 400 g/m² (16 bis 110 Pfund Papiergewicht) liegt.

Um das Gewicht der Wischleiste 30 niedrig zu halten, besteht die Wischleiste 30 in einer bevorzugten Ausgestaltung der Erfindung aus Aluminium.

In einer weiteren vorteilhaften Ausgestaltung der Erfindung haben das erste Endstück 10 und das zweite Endstück 20 einen ersten bzw. zweiten Anschlag 14 bzw. 24. In dieser Ausgestaltung hat die Wischleiste 30 einen Vorsprung 38, der an den ersten und zweiten Anschlag 14 bzw. 24 anschlägt, wenn sich die Wischleiste 30 weit genug gedreht hat, so dass er nicht überdrehen kann.

Ein weiterer Aspekt der Erfindung ist eine Verfahren, welches das Entstehen von Verunreinigungen auf dem Abtastglasschlitz 2 eines Scanners mit ortsfestem Lesekopf verhindert. Dieses Verfahren besteht darin, Druck auf den Originaldruckträger auszuüben, wenn dieser über den Abtastglasschlitz 2 gleitet, so dass der Originaldruckträger den Abtastglasschlitz 2 reinigt, während er über den Abtastglasschlitz 2 transportiert wird, wobei dieser Druck durch eine rotierbar gelagerte Druckträgerführung 1 ausgeübt wird und von der Reibungskraft des Originaldruckträgers hervorgerufen wird.

In einer vorteilhaften Ausgestaltung dieser Erfindung hat die Wischleiste 30 eine in etwa trapezähnliche Form (obwohl keine zwei Seiten genau parallel sind), die aus etwa 0,18 cm (0,07 Zoll) starkem Aluminium hergestellt ist. Bei dieser Ausgestaltung hat die Wischleiste 30 einen ca. 0,56 cm (0,22 Zoll) langen Vorsprung 38, der etwa 0,15 cm (0,06 Zoll) stark ist und am Drehpunkt 36 an der längsten Seite der trapezähnlichen Form ausgebildet ist. Die trapezähnliche Form und der Vorsprung 38 werden an einem Stück hergestellt. Die Seite der Wischleiste 30, die auf dem Glas aufliegt, ist ca. 1,27 cm (0,5 Zoll) lang. Die Seite der Wischleiste 30, die vom Ruhepunkt 35 aufwärts in Richtung der Eintrittsseite 4 des Abtastglasschlitzes 2 abgewinkelt ist, ist mit ca. 30° vom Abtastglasschlitz 2 aufwärts abgewinkelt, wobei der abgewinkelte Teil ca. 0,58 cm (0,23 Zoll) lang ist. Die längste Seite der Wischleiste ist von der Rückseite der Ruheseite der Wischleiste zum Drehpunkt mit einem Winkel von ca. 49° zur Oberfläche des Abtastglasschlitzes 2 hin abgewinkelt und ca. 1,85 cm (0,73 Zoll) lang.

### Bezugszeichenliste

- 1: rotierbar gelagerte Druckträgerführung
- 2: Abtastglasschlitz
- 4: Eintrittsseite
- 6: Austrittsseite
- 8: erstes Abtastglasschlitzende
- 9: zweites Abtastglasschlitzende
- 10: erstes Endstück
- 12: erste Endstücksöffnung
- 14: erster Anschlag
- 20: zweites Endstück
- 22: zweite Endstücksöffnung
- 24: zweiter Anschlag
- 30: Wischleiste
- 32: erstes Wischleistenende
- 34: zweites Wischleistenende
- 36: Drehpunkt
- 38: Vorsprung

## Patentansprüche

1. Rotierbar gelagerte Druckträgerführung (1) in einem Scanner mit ortsfestem Lesekopf, mit einer Wischleiste (30), die mittels Drehpunkten (36) gegenüber und parallel zu einem ortsfesten Abtastglasschlitz (2) gelagert ist und im Ruhezustand auf dem Abtastglasschlitz (2) aufliegt
**dadurch gekennzeichnet,**
**dass** ein Originaldruckträger beim Durchlaufen zwischen Druckträgerführung (1) und Abtastglasschlitz (2) eine Rotation der Druckträgerführung (1) um die Drehpunkte (36) verursacht, so dass die rotierbar gelagerte Druckträgerführung (1) im Gegenzug Druck auf den Originaldruckträger ausübt, der dadurch an den Abtastglasschlitz (2) angedrückt wird .

2. Vorrichtung nach Anspruch 1
**dadurch gekennzeichnet,**
**dass** durch das Andrücken des Originaldruckträgers an den Abtastglasschlitz (2) eine Reinigung des Abtastglases erreicht wird.

3. Rotierbar gelagerte Druckträgerführung (1) in einem Scanner mit ortsfestem Lesekopf, die es ermöglicht, mit dem Originaldruckträger den Abtastglasschlitz (2) zu reinigen, wobei der Abtastglasschlitz (2) ein erstes Ende (8) und ein zweites Ende (9) aufweist, die einander in Längsrichtung gegenüber liegen, und wobei das Papier in Querrichtung über den Abtastglasschlitz (2) von der Eintrittsseite (4) zur Austrittsseite (6) transportiert,
**gekennzeichnet durch**
ein erstes Endstück (10) mit einer ersten Öffnung (12), das am ersten Abtastglasschlitzende (8) am Scanner angebracht ist;
ein zweites Endstück (20) mit einer zweiten Öffnung (22), das am zweiten Abtastglasschlitzende (9) an den Scanner angebracht ist; und
eine Wischleiste (30) mit einem ersten Wischleistenende (32) und einem gegenüberliegenden zweiten Wischleistenende (34) sowie einem Drehpunkt (36), wobei das erste Wischleistenende (32) drehbar am Drehpunkt (36) am besagten Endstück (10) **durch** die erste Öffnung (12) hindurch befestigt ist und das zweite Wischleistenende drehbar am Drehpunkt (36) am Endstück (20) **durch** die zweite Öffnung (22) hindurch befestigt ist, wobei die Wischleiste (30) im Ruhezustand auf dem Abtastglasschlitz (2) aufliegt und beim Transportieren von Papier über den Abtastglasschlitz (2) die Wischleiste (30) **durch** die Kraft des Papiers in der Weise geringfügig drehbar ist, dass die Wischleiste (30) das Papier zwischen der Wischleiste (30) und dem Abtastglasschlitz (2) passieren lässt und dass die Wischleiste (30) **dadurch** Druck auf das Papier ausübt.

4. Rotierbar gelagerte Druckträgerführung nach einem der Ansprüche 1 bis 3,
**dadurch gekennzeichnet,**
**dass** der Drehpunkt (36) so gewählt wird, dass sich mehr als 50 % des Gewichts der Wischleiste (30) auf der Austrittsseite (6) des Drehpunktes (36) befinden.

5. Rotierbar gelagerte Druckträgerführung nach einem der Ansprüche 1 bis 4,
**dadurch gekennzeichnet,**
**dass** im Ruhezustand des Scanners die Wischleiste (30) auf der Austrittsseite (6) des Drehpunktes (36) auf dem Abtastglasschlitz (2) aufliegt, und dass die Wischleiste (30) vom Ruhepunkt aus nach oben in Richtung der Eintrittsseite (4) des Abtastglasschlitzes (2) abgewinkelt ist.

6. Rotierbar gelagerte Druckträgerführung nach einem der Ansprüche 1 bis 5,
**dadurch gekennzeichnet,**
**dass** das Gewicht der Wischleiste (30) etwa 100 g (3,5 Unzen) nicht überschreitet, wenn die Wischleiste (30) mit Papier verwendet wird, dessen Gewicht zwischen 60 g/m² und etwa 400 g/m² (16 bis 110 Pfund Papiergewicht) liegt.

7. Rotierbar gelagerte Druckträgerführung nach einem der Ansprüche 1 bis 6,
**dadurch gekennzeichnet,**
**dass** die Wischleiste (30) aus Aluminium hergestellt ist.

8. Rotierbar gelagerte Druckträgerführung nach einem der Ansprüche 1 bis 7,
**dadurch gekennzeichnet,**
**dass** das erste Endstück (10) und das zweite Endstück (20) einen ersten bzw. zweiten Anschlag (14, 34) aufweisen und die Wischleiste (30) einen Vorsprung (38) aufweist, der an den ersten und zweiten Anschlag (14, 34) anschlägt, wenn sich die Wischleiste (30) weit genug gedreht hat, so dass die Wischleiste (30) nicht überdrehen kann.

9. Verfahren zur Verhinderung des Entstehens von Verunreinigungen auf dem Abtastglasschlitz (2) eines Scanners mit geparktem Kopf
**gekennzeichnet durch**
die folgenden Verfahrensschritte:
Ausüben von Druck auf den Originaldruckträger, während dieser über den Abtastglasschlitz (2) transportiert wird, so dass der Originaldruckträger beim Passieren des Abtastglasschlitzes (2) diesen reinigt, wobei dieser Druck **durch** die Reibungskraft des Originaldruckträgers über eine rotierbar gelagerte Druckträgerführung(1) ausgeübt wird.
